# EUROPEAN PATENT SPECIFICATION

(11) **EP 2 093 181 B1**
(45) Date of publication and mention of the grant of the patent: **25.05.2016**
(21) Application number: 06834415.9
(22) Date of filing: 11.12.2006
(51) Int. Cl.: B66B 3/00, B66B 5/00, B66B 11/02, B66B 1/46, H04N 7/18, G08B 13/196

(54) **ELEVATOR MONITORING SYSTEM**
AUFZUGSÜBERWACHUNGSSYSTEM
SYSTÈME DE SURVEILLANCE D'ASCENSEUR

(43) Date of publication of application: 26.08.2009
(73) Proprietor: Mitsubishi Electric Corporation, Chiyoda-ku Tokyo 100-8310 (JP)
(72) Inventor: KURODA, Shinichi, Tokyo 100-8310 (JP)
(74) Representative: Hoffmann Eitle
(86) International application number: PCT/JP2006/324660
(87) International publication number: WO 2008/072304

(56) References cited:
- GB-A- 2 230 622
- JP-A- 07 215 617
- JP-A- 2002 215 892
- JP-A- 2002 370 877
- JP-A- 2005 001 864
- JP-A- 2006 103 854
- JP-A- 2006 103 854

## Description

### Technical Field

The present invention relates to a monitoring system for an elevator, for monitoring a user of an elevator by a security camera.

### Background Art

Conventionally, there has been proposed a monitoring system for an elevator, which photographs a surrounding area of an authentication device for performing authentication for use of the elevator with a security camera when a predetermined operation is performed on the authentication device. In the conventional monitoring system for the elevator, a photographing operation with the security camera is started at a time when the operation is started on the authentication device. If a result of authentication is "successful", the photographing operation is terminated when an elevator user rides on an elevator car and an elevator door is closed. If the result of authentication is "unsuccessful", the photographing operation is terminated upon elapse of a predetermined time (see

### Patent Document 1).

Patent Document 1: JP 2006-103854 A
Document JP 2006 103854 A relates to a security system for an elevator. When an elevator user performs a predetermined operation on an authentication device, the result of authentication is sent to an authentication result matching means. Image data from a crime prevention camera is inputted to an image data recording means. The security camera starts photographing the user, when an elevator user starts operation of the authentication device.
Document GB 2 230 622 A relates to a lift control system having cameras located inside lift cars and/or landing stages to view passengers.

### Disclosure of the Invention

### Problem to be solved by the Invention

In the conventional monitoring system for the elevator, however, the photographing with the security camera may no longer be continued after the elevator user rides on the elevator car. Therefore, it becomes difficult to further ensure the monitoring of the elevator user.

The present invention has been made in order to solve the problem described above, and has an object to obtain a monitoring system for an elevator, which is capable of further ensuring the monitoring of an elevator user.

### Means for solving the Problems

This object is accomplished by the monitoring system according to claim 1. The dependent claims describe advantageous embodiments.

A monitoring system for an elevator includes: an authentication device provided on at least any one of a plurality of floors at which a car of an elevator can stop, the authentication device authenticating use of the elevator upon a predetermined authentication operation performed thereon; a plurality of floor-side security cameras, each of the floor-side security cameras photographing a predetermined area of each of the floors; an intra-car security camera for photographing interior of the car; a ride-on/off detector for detecting whether or not there is a ride of a subject on/off the car; a switcher for selecting any one of image information output from each of the floor-side security cameras and image information output from the intra-car security camera as selected image information based on operation information indicating whether or not the authentication operation has been performed, ride-on/off information indicating whether there is the ride-on/off of the subject, and floor information indicating a position of the car; and a monitoring device comprising a recording medium, for recording the selected image information on the recording medium.

### Effects of the Invention

In the monitoring system for an elevator according to the present invention, the switcher selects any one of the image information output from each of the floor-side, security cameras and the image information output from the intra-car security camera as the selected image information based on each of the operation information, the ride-on/off information, and the floor information, and the selected image information is recorded on the recording medium. Therefore, even after the elevator user rides on the car, the user can be continuously photographed until the user rides off the car. In addition, the image information obtained by the photographing can be recorded. As a result, the user can be continuously monitored from the start of the operation of the authentication device until the user rides off the car, thereby further ensuring the monitoring of the elevator user.

### Brief Description of the Drawings

FIG. 1 is a block diagram illustrating a monitoring system for an elevator according to a first embodiment of the present invention.
FIG. 2 is a schematic perspective view when car interior with an entrance open is viewed from an elevator landing of a floor on which an authentication device illustrated in FIG. 1 is provided.
FIG. 3 is a front view illustrating a display screen of the display means 15 illustrated in FIG. 2.
FIG. 4 is a flowchart illustrating an operation of the monitoring system for the elevator, which is illustrated in FIG. 1.

### Best Mode for carrying out the Invention

Hereinafter, a preferred embodiment of the present invention is described referring to the drawings.

### First Embodiment

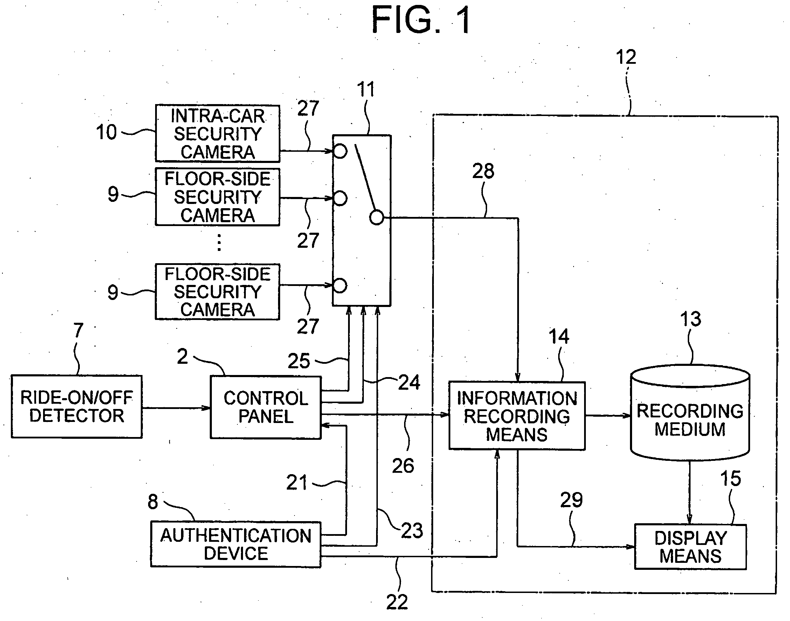

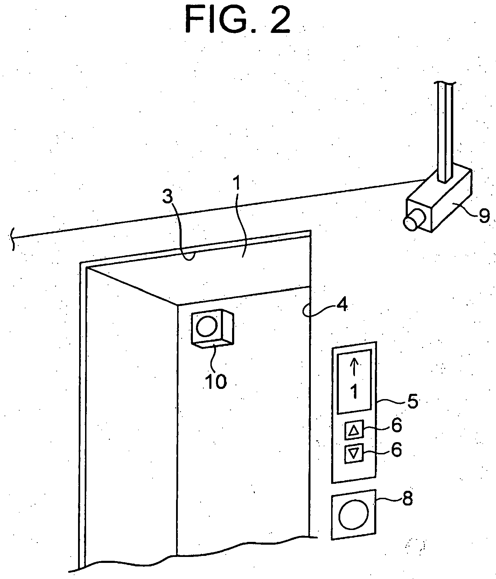

FIG. 1 is a block diagram illustrating a monitoring system for an elevator according to a first embodiment of the present invention. FIG. 2 is a schematic perspective view when car interior with an entrance open is viewed from an elevator landing of a floor on which an authentication device illustrated in FIG. 1 is provided. In the drawings, a car 1 of the elevator is raised and lowered in a hoistway provided in a building. The car 1 can be stopped at a plurality of floors by control of a control panel 2 for controlling an operation of the elevator.

A car entrance 3 is provided to the car 1. The car entrance 3 is opened and closed by the movement of a car door (not shown). At the elevator landing on each floor, a landing entrance 4 and a landing operating panel 5 located on one side of the landing entrance 4 are provided. The landing entrance 4 is opened and closed by the movement of a landing door (not shown). On the landing operating panel 5, landing buttons 6 to be operated on the landing are provided. A hall call registration on the landing is performed by an operation of the landing buttons 6.

When the car 1 is stopped at each floor, the car entrance 3 and the landing entrance 4 are opposed to each other. In this case, the car door and the landing door are movable in engagement with each other. The car entrance 3 and the landing entrance 4 are simultaneously opened and closed by the movement of the landing door and the car door which are in engagement. As a result, an elevator user (subject) can ride on or off the car 1.

A ride-on/off detector 7 (FIG. 1) for detecting a ride of the elevator user (hereinafter, referred to simply as "user") on/off the car 1 is provided between the landing of each floor and the car 1. The ride-on/off detector 7 includes a car door sensor provided to the car door and a landing door sensor provided to the landing door. The car door sensor detects the passage of the user through the car entrance 3. The landing door sensor detects the passage of the user through the landing entrance 4.

The ride-on/off detector 7 detects the ride of the user on/off the car 1 when the passage of the user is detected by the landing door sensor and the car door sensor. The ride-on/off detector 7 also detects that there is no ride of the user on/off the car 1 when the passage of the user is detected neither by the car door sensor nor by the landing door sensor.

At the landing of a predetermined floor (ground floor corresponding to an entrance floor in this example), an authentication device 8 for the elevator is provided. The authentication device 8 is provided below the landing operating panel 5 (FIG. 2). The authentication device 8 performs authentication for the use of the elevator upon a predetermined authentication operation performed thereon. As the predetermined authentication operation, for example, an operation of holding a card or key registered with personal information over the authentication device 8 can be given.

After the authentication for the use of the elevator, the authentication device 8 generates authentication information 21 containing the result of authentication, specifically, any one of "successful" and "unsuccessful" results. The authentication device 8 has a clock function, and, upon the authentication operation, generates date/time information 22 according to a date and a time when the authentication is performed. Further, the authentication device 8 generates operation information 23 indicating whether or not the authentication operation has been performed. In this example, the operation information 23 is turned ON signal during a given time period after the start of the authentication operation, and, thereafter, the operation information 23 is turned OFF signal. The operation information 23 is generated regardless of the result of authentication.

The information output from the ride-on/off detector 7. and the authentication information 21 output from the authentication device 8 are transmitted to the control panel 2 of the elevator. The control panel 2 inhibits a call registration performed by the operation of the landing buttons 6 when the result of authentication given by the authentication device 8 is "unsuccessful", and cancels the inhibition of the call registration only when the result of authentication given by the authentication device 8 is "successful".

The control panel 2 judges whether there is the ride of the user on/off the car 1 based on the information from the ride-on/off detector 7, and controls the operation of the elevator based on the result of judgment. Further, the control panel 2 outputs ride-on/off information 24 indicating whether there is the ride of the user on/off the car 1 based on the information output from the ride-on/off detector 7. The ride-on/off information 24 is output from the control panel 2 together with floor information 25 indicating the position of the car 1 (floor at which the car 1 is present). In this case, the ride-on/off information 24 is turned ON signal only during a given time period after the detection of the ride of the user on/off the car 1, and thereafter, the ride-on/off information 24 is turned OFF signal.

The control panel 2 can also output travel information 26 indicating a travel history of the elevator independently of the ride-on/off information 24 and the floor information 25. The travel information 26 contains the floor information 25, door opening/closing information, and car direction information. The door opening/closing information is information indicating the opening and closing of the car entrance 3 and the landing entrance 4. The car direction information is information indicating a direction of movement of the car 1.

At the landing of each floor, a plurality of floor-side security cameras 9, each for photographing a predetermined area on each floor, are provided. In this example, the predetermined area on each floor includes the landing entrance 4. The predetermined area on the predetermined floor (entrance floor) provided with the authentication device 8 includes both the landing entrance 4 and the surrounding area of the authentication device 8.

An intra-car security camera 10 for photographing the interior of the car 1 is provided in the car 1. In this example, the intra-car security camera 10 photographs an area including the car entrance 3.

Each of the floor-side security cameras 9 and the intra-car security camera 10 is capable of performing continuous photographing. Moreover, each of the floor-side security cameras 9 and the intra-car security camera 10 constantly outputs image information (image data) 27 obtained by the photographing.

The operation information 23 output from the authentication device 8, the ride-on/off information 24 and the floor information 25 output from the control panel 2, and the image information 27 output from each of the floor-side security cameras 9 and the intra-car security camera 10 are transmitted to a switcher 11. The switcher 11 selects any one of the image information 27 output from each of the floor-side security cameras 9 and the intra-car security camera 10 as selected image information 28 based on each of the operation information 23, the ride-on/off information 24, and the floor information 25. Specifically, the switcher 11 judges a position at which the user is present based on each of the operation information 23, the ride-on/off information 24, and the floor information 25, and selects the image information 27 output from the security camera which photographs the judged position at which the user is present from the floor-side security cameras 9 and the intra-car security camera 10 as the selected image information 28.

More specifically, when the authentication device 8 detects that the authentication operation has been performed, the switcher 11 selects the image information 27 output from the floor-side security camera 9, which is provided on the floor (entrance floor) provided with the authentication device 8, as the selected image information 28. When it is judged by the control panel 2 that there is the ride of the user on/off the car 1 while the image information 27 output from each of the floor-side security cameras 9 is selected, the switcher 11 switches the selection of the selected image information 28 from the image information 27 output from the floor-side security camera 9 to the image information 27 output from the intra-car security camera 10. Further, when it is judged by the control panel 2 that there is the ride of the user on/off the car 1 while the image information 27 output from the intra-car security camera 10 is selected, the switcher 11 switches the selection of the selected image information 28 from the image information 27 output from the intra-car security camera 10 to the image information 27 output from the floor-side security camera 9 provided on the floor at which the car 1 arrives.

Each of the selected image information 28 output from the switcher 11, the travel information 26 output from the control panel 2, and the date/time information 22 output from the authentication device 8 is transmitted to a monitoring device 12 for monitoring the user of the elevator. The monitoring device 12 includes a recording medium 13, information recording means 14, and display means 15.

The recording medium 13 can record each of the selected image information 28 and the travel information 26 thereon.

The selected image information 28, the travel information 26, and the date/time information 22 are received by the information recording means 14. The information recording means 14 records the selected image information 28 and the travel information 26 on the recording medium 13 in association with each other. Specifically, the information recording means 14 records the selected image information 28 and the travel information 26 at the same address on the recording medium 13. The information recording means 14 creates list information 29 in which each of the selected image information 28 and the travel information 26 is associated with the date/time information 22. Specifically, the list information 29 created by the information recording means 14 describes the address on the recording medium 13, at which the selected image information 28 and the travel information 26 are collectively recorded, and the date/time information 22 in association with each other. Further, the information recording means 14 outputs the created list information 29 to the display means 15.

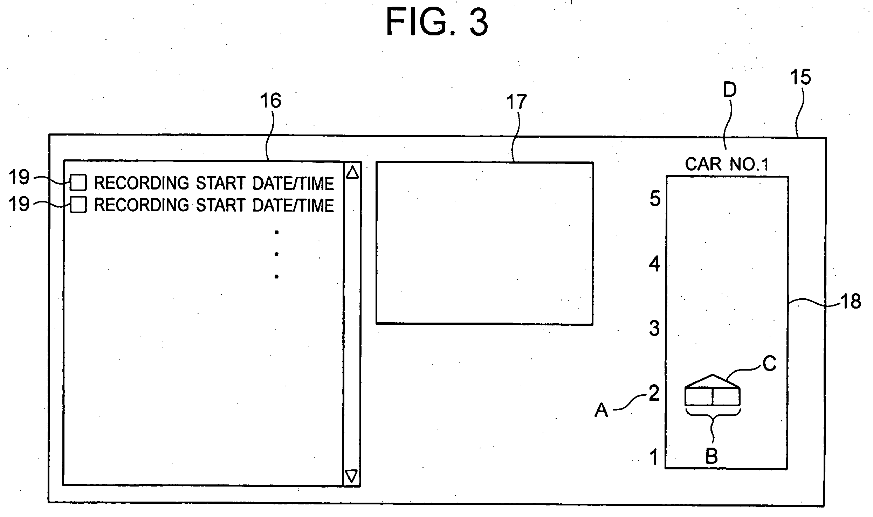

FIG. 3 is a front view illustrating a display screen of the display means 15 illustrated in FIG. 2. In the drawing, a list display area 16, an image display area 17, and a travel history display area 18 are provided on the display screen of the display means 15.

Upon reception of the list information 29, the display means 15 displays a date and a time when the authentication operation is started on the authentication device 8 as a recording start date/time (search indicator) in the list display area 16 based on the list information 29. The recording start date/time is calculated based on the date/time information 22 contained in the list information 29. The display of the recording start date/time is added to the list display area 16 by the display means 15 each time the authentication operation is performed on the authentication device 8. The display means 15 also displays operation buttons 19 for designation, which can be operated on the display screen, in the list display area 16, for each recording start date/time.

The display means 15 can acquire the selected image information 28 and the travel information 26 in association with the recording start date/time designated by the operation of the operation buttons 19 for designation from the recording medium 13. The display means 15 displays an image obtained based on the selected image information 28 in the image display area 17 while displaying the travel history of the elevator, which is obtained based on the travel information 26, in the travel history display area 18. Specifically, the display means 15 can simultaneously display the image obtained based on the selected image information 28 and the travel history of the elevator, which is obtained based on the travel information 26.

In this example, as the display of the travel history of the elevator, a graphic representation A of the position of the car 1 (floor at which the car 1 is present), a graphic representation B of an open/closed state of the car entrance 3, a graphic representation C of a direction of movement of the car 1, and a graphic representation D of a name of the elevator are used. The graphic representations A to C are given by the simplified illustration of the elevator.

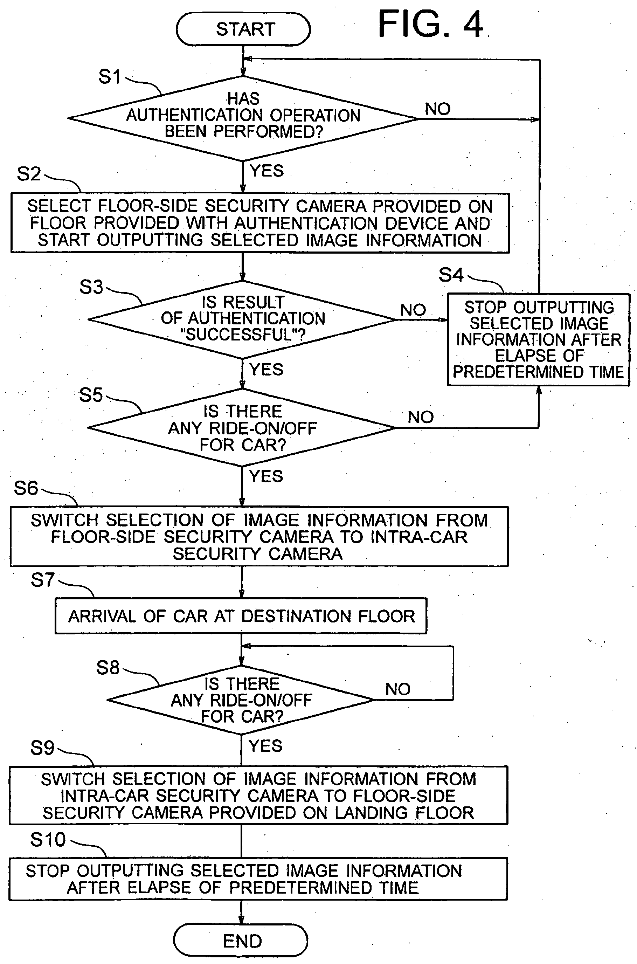

Next, an operation is described. FIG. 4 is a flowchart illustrating an operation of the monitoring system for the elevator, which is illustrated in FIG. 1. As illustrated in the drawing, the authentication device 8 constantly performs the judgment whether or not the predetermined authentication operation has been performed (S1). Moreover, on each of the floors and in the car 1, the photographing with each of the floor-side security cameras 9 and the intra-car security camera 10 is continuously performed.

While the authentication operation is not performed on the authentication device 8, the authentication device 8 repeatedly judges whether or not the authentication operation has been performed. In this case, none of the image information 27 from each of the floor-side security cameras 9 and that from the intra-car security camera 10 is selected by the switcher 11. Therefore, the output of the selected image information 28 from the switcher 11 is stopped.

Thereafter, when the authentication operation is performed on the authentication device 8, the image information 27 output from the floor-side security camera 9 provided on the entrance floor (floor provided with the authentication device 8) is selected by the switcher 11 as the selected image information 28. As a result, the selected image information 28 is output from the switcher 11 to the information recording means 14 (S2).

Thereafter, the authentication for the use of the elevator is performed by the authentication device 8 (S3). When the result of authentication is "unsuccessful" (specifically, when the authentication gives the result that the use of the elevator is not allowed), a call registration by the operation of the landing buttons 6 is inhibited by the control of the control panel 2. Therefore, even when the landing buttons 6 are operated, the call registration is not made. Moreover, in this case, the output of the selected image information 28 from the switcher 11 is stopped after elapse of a predetermined time (S4).

When the result of authentication is "successful" (specifically, the authentication gives the result that the use of the elevator is allowed), the inhibition of the call registration by the operation of the landing buttons 6 is cancelled by the control of the control panel 2. In this case, the call registration is made by the operation of the landing buttons 6 to move the car 1 responding to the call registration to the entrance floor. The output of the selected image information 28 from the switcher 11 is continuously performed.

Thereafter, the control panel 2 judges whether or not there is the ride of the user on/off the car 1 based on the information from the ride-on/off detector 7 (S5). When it is judged that there is no ride of the user on/off the car 1, the output of the selected image information 28 from the switcher 11 is stopped after elapse of the predetermined time (S4).

When it is judged that there is the ride of the user on/off the car 1, the selection of the image information 27 by the switcher 11 is switched from the floor-side security camera 9 to the intra-car security camera 10 (S6). As a result, the selected image information 28 to be output from the switcher 11 is switched to the image information 27 output from the intra-car security camera 10.

Thereafter, upon arrival of the car 1 at a destination floor (S7), the control panel 2 judges again whether or not there is the ride of the user on/off the car 1 based on the information from the ride-on/off detector 7 (S8). When it is judged that there is no ride of the user on/off the car 1, the judgment whether or not there is the ride-on/off of the user is repeatedly performed.

When it is judged that there is the ride of the user on/off the car 1, the image information 27 to be selected by the switcher 11 is switched from the image information output from the intra-car security camera 10 to that output from the floor-side security camera 9 provided on the floor at which the car 1 arrives (S9). As a result, the selected image information 28 to be output from the switcher 11 is switched to the image information 27 output from the floor-side security camera 9 provided on the landing floor for the car 1.

Thereafter, the output of the selected image information 28 from the switcher 11 is stopped after elapse of the predetermined time (S10).

Next, an operation of the monitoring device 12 is described. When the selected image information 28 is output from the switcher 11, the travel information 26 output from the control panel 2 and the date/time information 22 output from the authentication device 8 are received together with the selected image information 28 by the information recording means 14.

Upon reception of the selected image information 28, the travel information 26, and the date/time information 22 by the information recording means 14, the selected image information 28 and the travel information 26 are recorded at an address on the recording medium 13 by the information recording means 14. At this time, the list information 29 describing the address on the recording medium 13, at which the selected image information 28 and the travel information 26 are recorded, and the date/time information 22 in association with each other is created by the information recording means 14. Thereafter, the list information 29 is output from the information recording means 14 to the display means 15.

Upon reception of the list information 29 by the display means 15, the display means 15 calculates the recording start date/time based on the list information 29. Thereafter, the calculated recording start date/time is displayed together with the operation button 19 for designation in the list display area 16.

When a monitoring person operates the operation button 19 for designation, which indicates a desired recording start date/time, the address corresponding to the recording start date/time designated by the operation of the operation button 19 for designation is identified by the display means 15 based on the list information 29. Thereafter, based on the identified address, the selected image information 28 and the travel information 26 are read from the recording medium 13 by the display means 15. Thereafter, the image obtained based on the selected image information 28 is displayed in the image display area 17, whereas the travel history of the elevator, which is obtained based on the travel information 26, is displayed in the travel history display area 18.

In the monitoring system for the elevator as described above, the switcher 11 selects any one of the image information 27 output from each of the floor-side security cameras 9 and that output from the intra-car security camera 10 as the selected image information 28 based on each of the operation information 23, the ride-on/off information 24, and the floor information 25. Then, the selected image information 28 is recorded on the recording medium 13. Therefore, even after the user of the elevator rides on the car 1, the photographing can be continued to follow the user until the user rides off the car. In addition, the image information obtained by the photographing can be recorded. As a result, the user can be continuously monitored from the start of the operation of the authentication device 8 until the user rides off the car 1. Accordingly, the monitoring of the user of the elevator can be further ensured.

Further, the selected image information 28 and the travel information 26 are recorded in association with each other on the recording medium 13, and hence more specific information such as the floor on which the user rides off the car, and the like can be recorded.

Further, the display means 15 is capable of simultaneously displaying the image obtained based on the selected image information 28 and the travel history of the elevator, which is obtained based on the travel information 26, and hence a behavior of the user and a traveling state of the elevator can be recognized in association with each other. Therefore, the relation between the behavior of the user and the travel of the elevator can be easily understood.

Further, the display means 15 displays the operable operation button 19 for designation, and acquires, based on the list information 29, each of the selected image information 28 and the travel information 26 in association with the date/time information 22 designated by the operation of the operation button 19 for designation. Therefore, the display means 15 can easily display the image and the travel history at desired date and time by the operation of the operation button 19 for designation.

While the authentication device 8 is provided only on the entrance floor of all the floors in the example described above, the authentication devices 8 may be provided on all the floors or only on a plurality of specific floors.

While the ride-on/off detector 7 detects only the ride of the user on/off the car 1, the ride-on/off detector may detect the ride-on and the ride-off in a separate manner. In this case, the ride-on/off detector includes a scale device for generating a signal according to a weight load on the car 1, the car door sensor, and the landing door sensor. The ride-on is detected by the ride-on/off detector based on the detection of the passage of the user by the car door sensor and the landing door sensor and the detection of an increase in weight load on the car 1 by the scale device. The ride-off is detected by the ride-on/off detector based on the detection of the passage of the user by the car door sensor and the landing door sensor and the detection of a reduction in weight load on the car by the scale device.

While the area including the landing entrance 4 and the area including the surrounding area of the authentication device 8 are photographed by the same floor-side security camera 9 which is provided on the floor provided with the authentication device 8 in the example described above, the area including the landing entrance 4 may be photographed by one of the floor-side security cameras and the area including the surrounding area of the authentication device 8 may be photographed by another one of the floor-side security cameras. In this case, the switcher 11 selects the image information output from the another one of the floor-side security cameras when the authentication operation is performed on the authentication device 8. Moreover, when the ride of the user on/off the car 1 is detected by the ride-on/off detector 7 while the image information output from the intra-car security camera 10 is selected, the switcher 11 selects the image information output from the one of the floor-side security cameras.

## Claims

1. A monitoring system for an elevator, comprising:
an authentication device (8) provided on at least any one of a plurality of floors at which a car of an elevator can stop, the authentication device configured to authenticate use of the elevator upon a predetermined authentication operation performed thereon;
a plurality of floor-side security cameras (9), each of the floor-side security cameras configured to photography a predetermined area of each of the floors;
an intra-car security camera (10) for photographing interior of the car;
a ride-on/off detector (7) for detecting whether or not there is a ride of a subject on/off the car;
a switcher (11) for selecting any one of image information output from each of the floor-side security cameras and image information output from the intra-car security camera as selected image information, based on operation information indicating whether or not the authentication operation has been performed, ride-on/off information indicating whether there is the ride-on/off of the subject, and floor information indicating a position of the car, wherein the switcher is configured to judge a position at which the user is present based on each of the operation information, ride on/off information, and the floor information and select the image information output from the security camera which photographs the judged position at which the user is present from the floor-side security cameras (9) and the intra-car security camera (10) as the selected image information; and
a monitoring device (12) comprising a recording medium (13), for recording the selected image information on the recording medium.

2. A monitoring system for an elevator according to Claim 1, wherein the monitoring device (12) can acquire travel information indicating a travel history of the elevator from a control panel of the elevator, and records the selected image information and the travel information on the recording medium in association with each other.

3. A monitoring system for an elevator according to Claim 2, wherein:
the monitoring device (12) further comprises display means (15); and
the display means can simultaneously display an image obtained based on the selected image information and the travel history of the elevator, the travel history being obtained based on the travel information.

4. A monitoring system for an elevator according to Claim 3, wherein:
the authentication device (8) is configured to generate date/time information according to a date and a time when the authentication operation is performed;
the monitoring device (12) is configured to create list information containing the selected image information, the travel information, and the date/time information, each of the selected image information and the travel information being associated with the date/time information; and
the display means (15) is configured to display an operable operation button for designation, and acquire, based on the list information, each of the selected image information and the travel information associated with the date/time information designated by an operation of the operation button for designation.

## Patentansprüche

1. Überwachungssystem für einen Aufzug, umfassend:
eine Authentifizierungsvorrichtung (8), die auf wenigstens einem einer Vielzahl von Stockwerken bereitgestellt wird, an denen eine Kabine eines Aufzugs stoppen kann, wobei die Authentifizierungsvorrichtung eingerichtet ist zum Authentifizieren einer Verwendung des Aufzugs bei einem darauf durchgeführten, vorbestimmten Authentifizierungsbetrieb;
eine Vielzahl von stockwerkseitigen Sicherheitskameras (9), wobei jede der stockwerkseitigen Sicherheitskameras eingerichtet ist zum Fotografieren eines vorbestimmten Bereiches jeder der Stockwerke;
eine kabineninterne Sicherheitskamera (10) zum Fotografieren eines Innenraums der Kabine;
einen Ein/Ausstiegs-Detektor (7) zum Detektieren, ob es einen Ein/Ausstieg eines Subjekts in/aus der Kabine gibt;
einen Schalter (11) zum Auswählen eines von einer Bildinformation, die von jeder der stockwerkseitigen Sicherheitskameras ausgegeben wird, und einer Bildinformation, die von der kabineninternen Sicherheitskamera ausgegeben wird, als ausgewählte Bildinformation, basierend auf einer Betriebsinformation, die anzeigt, ob der Authentifizierungsbetrieb durchgeführt wurde oder nicht, einer Ein/Ausstiegs-Information, die anzeigt, ob es den Ein/Ausstieg des Subjekts gibt, und einer Stockwerkinformation, die eine Position der Kabine anzeigt, wobei der Schalter eingerichtet ist zum Beurteilen einer Position, an der sich der Benutzer befindet, basierend auf jeder der Betriebsinformation, Ein/Ausstiegs-Information und Stockwerksinformation, und zum Auswählen der Bildinformation, die von der Sicherheitskamera ausgegeben wird, die die beurteilte Position fotografiert, an der der Benutzer sich befindet, aus den stockwerksseitigen Sicherheitskameras (9) und der kabineninternen Sicherheitskamera (10) als die ausgewählte Bildinformation; und
eine Überwachungsvorrichtung (12), die ein Aufzeichnungsmedium (13) umfasst, zum Aufzeichnen der ausgewählten Bildinformation auf dem Aufzeichnungsmedium.

2. Überwachungssystem für einen Aufzug nach Anspruch 1, wobei die Überwachungsvorrichtung (12) Fahrinformation erfassen kann, die eine Fahrhistorie des Aufzugs anzeigt, von einem Bedienpult des Aufzugs, und die ausgewählte Bildinformation und die Fahrinformation auf dem Aufzeichnungsmedium in Assoziation miteinander aufzeichnet.

3. Überwachungssystem für einen Aufzug nach Anspruch 2, wobei:
die Überwachungsvorrichtung (12) weiterhin ein Anzeigemittel (15) umfasst; und
das Anzeigemittel ein basierend auf der ausgewählten Bildinformation erhaltenes Bild und die Fahrhistorie des Aufzugs gleichzeitig anzeigen kann, wobei die Fahrhistorie basierend auf der Fahrinformation erhalten wird.

4. Überwachungssystem für einen Aufzug nach Anspruch 3, wobei:
die Authentifizierungsvorrichtung (8) eingerichtet ist zum Erzeugen einer Datum/Zeit-Information entsprechend einem Datum und einer Zeit, wann der Authentifizierungsbetrieb durchgeführt wird;
die Überwachungsvorrichtung (12) eingerichtet ist zum Erzeugen einer Listeninformation, die die ausgewählte Bildinformation, die Fahrinformation und die Datum/Zeit-Information enthält, wobei jede der ausgewählten Bildinformation und der Fahrinformation mit der Datum/Zeit-Information assoziiert ist; und
das Anzeigemittel (15) eingerichtet ist zum Anzeigen eines betreibbaren Betriebsknopfs zur Bestimmung und zum Erfassen, basierend auf der Listeninformation, jedes von der ausgewählten Bildinformation und der Fahrinformation, die mit der Datum/Zeit-Information assoziiert sind, bestimmt durch einen Betrieb des Betriebsknopfs zur Bestimmung.

## Revendications

1. Système de surveillance pour un ascenseur, comprenant :
un dispositif d'authentification (8) disposé sur au moins l'un quelconque d'une pluralité de paliers où peut s'arrêter une cabine d'un ascenseur, le dispositif d'authentification étant configuré pour authentifier l'utilisation de l'ascenseur lors d'une opération d'authentification prédéterminée qui y est effectuée ;
une pluralité de caméras de sécurité côté palier (9), chacune des caméras de sécurité côté palier étant configurée pour photographier une zone prédéterminée de chacun des paliers ;
une caméra de sécurité intra-cabine (10) pour photographier l'intérieur de la cabine ;
un détecteur d'entrée /sortie (7) pour détecter si oui ou non un sujet est entré dans la cabine ou en est sorti ;
un sélecteur (11) pour sélectionner l'une quelconque d'informations d'image délivrées par chacune des caméras de sécurité côté palier et d'informations d'image délivrées par la caméra de sécurité intra-cabine en tant qu'informations d'image sélectionnées, sur la base d'informations opérationnelles indiquant si oui ou non l'opération d'authentification a été exécutée, d'informations d'entrée/sortie indiquant si le sujet est entré ou sorti et d'informations de palier indiquant une position de la cabine, dans lequel le sélecteur est conçu pour juger d'une position à laquelle se trouve l'utilisateur sur la base de chacune des informations opérationnelles, des informations d'entrée/sortie et des informations de palier et sélectionner les informations d'image délivrées par la caméra de sécurité qui photographie la position jugée à laquelle se trouve l'utilisateur parmi les caméras de sécurité côté palier (9) et la caméra de sécurité intra-cabine (10) en tant qu'informations d'image sélectionnées ; et
un dispositif de surveillance (12) comprenant un support d'enregistrement (13) pour enregistrer les informations d'image sélectionnées sur le support d'enregistrement.

2. Système de surveillance pour un ascenseur selon la revendication 1, dans lequel le dispositif de surveillance (12) peut acquérir des informations de déplacement indiquant un historique de déplacement de l'ascenseur et enregistre les informations d'image sélectionnées et les informations de déplacement sur le support d'enregistrement en association mutuelle .

3. Système de surveillance pour un ascenseur selon la revendication 2, dans lequel :
le dispositif de surveillance (12) comprend en outre des moyens d'affichage (15) et
les moyens d'affichage peuvent afficher simultanément une image obtenue sur la base des informations d'image sélectionnées et de l'historique de déplacement de l'ascenseur, l'historique de déplacement étant obtenu sur la base des informations de déplacement .

4. Système de surveillance pour un ascenseur selon la revendication 3, dans lequel :
le dispositif d'authentification (8) est configuré pour générer des informations de date/heure conformément à une date et à une heure où l'opération d'authentification est exécutée ;
le dispositif de surveillance (12) est configuré pour créer des informations de liste contenant les informations d'image sélectionnées, les informations de déplacement et les informations de date/heure, chacune des informations d'image sélectionnées et des informations de déplacement étant associées aux informations de date/heure ; et
les moyens d'affichage (15) sont configurés pour afficher un bouton de commande actionnable pour la désignation et acquérir, sur la base des informations de liste, chacune des informations d'image sélectionnées et des informations de déplacement associées aux informations de date/heure désignées par un actionnement du bouton de commande pour la désignation.
